# EUROPEAN PATENT APPLICATION

(11) **EP 4 733 015 A1**
(43) Date of publication of application: **29.04.2026**
(21) Application number: 24208407.7
(22) Date of filing: 23.10.2024
(51) Int. Cl.: B25J 15/06, B25J 15/00

(54) **GRIPPING DEVICE**

(71) Applicant: Alpla-Werke Alwin Lehner GMBH & Co.KG, 6971 Hard (AT)
(72) Inventor: Carlsen, Christian, 4180 Soroe (DK); Krøjgaard, Kia, 2300 København S (DK)
(74) Representative: Bohest AG Branch Ostschweiz

(57) **Abstract**

The current disclosure relates to a gripping device (20) for handling wet fibre-based products (30). The gripping device (20) comprises a surface area (21), complementary to a respective surface area of the wet fibre-based product (30) to be handled. A plurality of openings (22) is arranged in the surface area (21) .

## Description

The present invention relates to a gripping device for handling wet fibre-based products, in particular, fibre-based hollow containers in accordance with the preamble of the independent claim.

Different containers for holding liquid are known from the prior art. For example, glass bottles or plastic bottles have become popular for holding beverages. Containers which are made of fibre-based material have likewise already been proposed.

Such containers are typically produced from a pulp. The production process is a two-stage process. In the first stage, a blank of a container is produced and in the second stage, the blank is dried and, if necessary, cured.

The pulp is a mixture of fibres and water, in particular natural fibres such as hemp fibres, cellulose fibres or flax fibres or a mixture thereof. The pulp may have additives, which, for example, improve curing of the compressed pulp or have an influence on the later appearance or generally change the properties of the pulp or of the later container.

Typically, to produce the blank, pulp is injected into a mould until a sufficiently thick layer of fibres has been deposited on the inner surface of the mould. The mould can be porous or made from a mesh which allows water to be drained off.

As soon as the desired thickness of the layer is received, the injection of the pulp is interrupted. A flexible balloon having the shape of an inner contour of the to be produced container is introduced into the mould and blown up such that the layer of fibres is pressed against the inner surface of the mould. This results in a drainage of water from the fibres.

The layer of fibres is not only drained, but also compacted. These steps are performed to form a blank inside of the mould. This blank has an inherent stability.

Typically, moulds are made form two halves such that the blank can be demoulded.

The blank, as present in the mould after pressing with the flexible tool in not yet ready to use. Indeed, the blank has to be dried and/or cured. These next steps are typically performed outside of the mould, either in a second mould, e.g. as disclosed in WO 2023/232995 A1, or without mould at all. In each case, the blank has to be demoulded from the mould and transferred to a different place or into a second press-mould.

The blank, although having an inherent stability, is still very sensitive to force before drying and must be handled very carefully. There is a risk that mechanical grippers will leave production marks on the blank and/or the blanks are deformed.

It is thus an aim of the invention to remedy at least one of the disadvantages of the prior art. In particular, a gripping device for handling blanks, thus wet fibre-based products, in particular fibre-based hollow containers, is to be provided, which is simple, counteracts production marks and avoids damage to the blank.

This object is achieved by the device defined in the independent claim. Further embodiments emerge from the dependent claims.

A gripping device according to the invention for handling wet fibre-based products, in particular fibre-based hollow containers, comprises a surface area which is complementary to a respective surface area of the wet fibre-based product, also called blank, to be handled. A plurality of openings is arranged in the surface area of the gripping device.

A vacuum can be applied via the openings to the blank which allows the blank to be removed from the mould. The provision of a plurality of openings result in that the vacuum is evenly applied to the blank. Hence, it is therefore sufficient to create only a slight vacuum, which has only a minor effect or impact on the blank. Hence, an additional drainage of the product, resulting in an unevenly distributed moisture, can be avoided, as well as destruction or deforming of the product due to high suction force.

The plurality of openings can be arranged in one or more groups on the gripping device.

This leads to a desired distribution of the suction force. The suction force thus can be applied to areas of the blank which are more resistant, in other word, it can be avoided to apply the force on areas, which are e.g. more fragile and/or are manufactured with higher tolerances which would lead to a less accuracy of fit between the gripping device and the blank.

The openings of the plurality of openings and/or of each group of openings can be arranged in a regular pattern. The distribution of suction force can be even more evenly distributed.

The openings of the plurality of openings and/or of each group of openings may merge into a common vacuum chamber.

Providing a common vacuum chamber onto which all openings are connected simplifies the device and appliance of the vacuum.

It can be provided that the openings of each group of openings merge into a respective common duct. This would allow to provide different vacuums to each group of openings, which might be advantageous, if the respective surface areas of the blank have different properties, e.g. a different resistance or flexibility or rigidity.

In this case, it might be advantageous to have two different vacuum chambers or at least for each group of openings a separate control unit to regulate the vacuum.

A drain valve may be connected to the common vacuum chamber or to each duct, respectively. There is always a chance, that some of the moisture of the blank evaporates into the openings and thus into the vacuum system, which is not desirable. By providing drain valves, this moisture, typically condensed into water, can be removed from the system.

The openings are preferably connected to a vacuum unit such that a vacuum can be applied to each opening. This connection can be a direct connection, or, as already stated above, a connection via a vacuum chamber. This allows to supply a vacuum to the openings.

The surface area of the gripping device might be designed to cover at least 10%, in particular 15%, of the respective surface area of the fibre-based product, thus, of the blank.

This ensures, that the gripping device gets into contact with the blank not only at certain points but over a large area which reduces the possibility to leave production marks on the blank.

The surface area of the gripping device might be designed to cover at most 50% of the respective surface area of the fibre-based product, thus, of the blank.

This ensures, that the area of the openings of the gripping device is not too large to avoid deformation caused by a missing counter part, i.e. surface area of the gripping device.

The surface area of the gripping device can be bordered by a first cell foam. Cell foam enables to ad an element to the surface which can adopt to uneven parts of the blank such that a either vacuum can still be applied and/or a smooth contact between the gripping device and a respective container to be gripped can be enabled.

Each group of the opening of the gripping device can be bordered by a second cell foam. In this case, cell foam enables to ad an element to the surface which can adopt to uneven parts of the blank such that either a vacuum can still be applied for each group independently and/or a smooth contact between the gripping device and a respective container to be gripped can be enabled.

The openings can have a diameter between 0.1 mm and 5 mm, in particular, between 1 mm and 3 mm. These dimensions secure that the surface of the blank remains undeformed when the vacuum is applied. If the openings are not circular, the dimension of a respective opening is calculated based on an equivalent circular area of the opening.

The openings together have an area which preferably covers at least 5%, preferably at least 10%, of the surface area. This ensures that the holding power even from a small vacuum is sufficient.

The openings together have an area which preferably does not cover more than 60% of the surface area. This ensures that the remaining surface can provide a bearing for the respective surface of the blank.

Various aspects of the invention will be described by way of example with reference to schematic drawings. These show:
- Figure 1:: A gripping device;
- Figure 2:: the gripping device of figure 1 holding a fibre-based container.

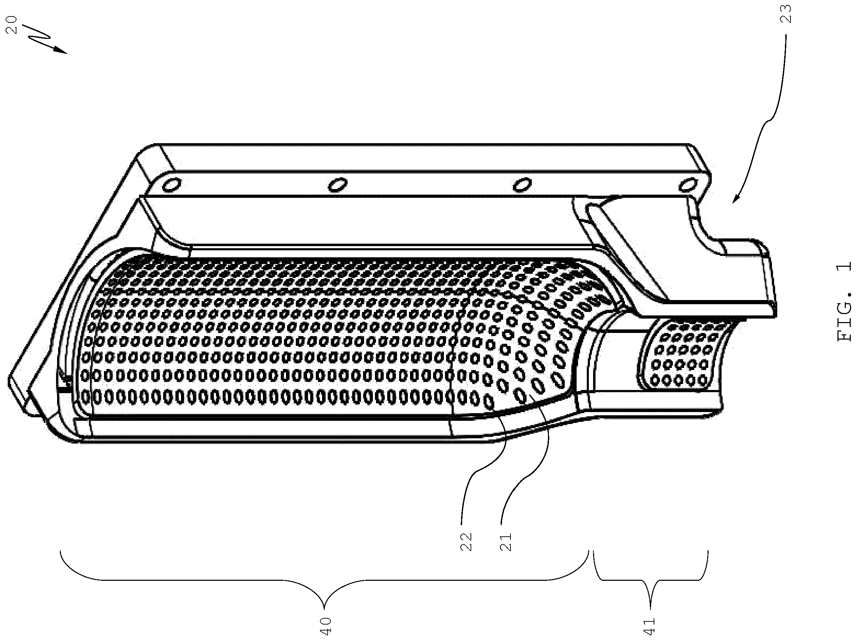

Figure 1 shows a gripping device 20. The gripping device 20 has an inner contour with a surface area 21. A plurality of openings 22 is arranged on the surface area 21. The openings 22 are arranged in a regular pattern. As can be seen in figure 1, the plurality of openings 22 comprises two groups of openings 22.

The first group 40 is arranged on a body part of the gripping device 20, the second group 41 is arranged on a neck part of the gripping device 20. On the lateral edges of the gripping device 20, a no further specified recess is arranged into which a cell foam can be placed. This cell foam provides a smooth contact between the gripping device 20 and a respective container to be gripped.

The openings 22 of the first group 40 and of the second group 41 extend trough the gripping device 20. On the, in figure 1, lower end of the gripping device 20, a drain valve 23 is arranged to remove moisture from the system.

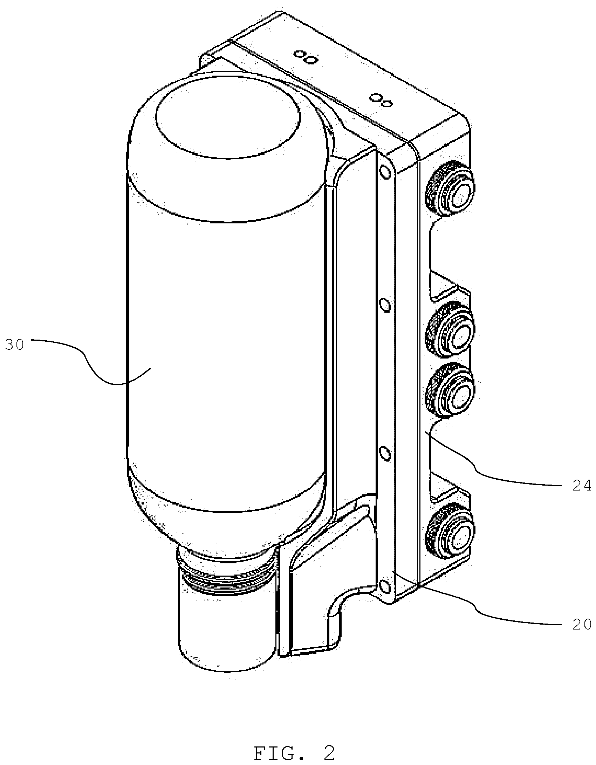

Figure 2 shows the gripping device 20 of figure 1 holding a respective fibre-based container, or blank, 30 be means of a vacuum. The gripping device 20 is attached to a mounting plate 24. Vacuum chambers are formed between the gripping device 20 and the mounting plate 24 into which the openings 22 extend such that each group 40, 41 of openings 22 can be charged with a vacuum.

The fibre-based container 30 in figure 2 is illustrated with threads on its neck. Compared with figure 1, it is evident that those threads are between the two groups 40, 41 of openings 22. In this area, the surface of the container 30 is uneven and no vacuum should be applied.

## Claims

1. Gripping device (20) for handling wet fibre-based products (30), in particular fibre-based hollow containers, the gripping device (20) comprises a surface area (21), complementary to a respective surface area of the wet fibre-based product (30) to be handled, **characterized in that**
a plurality of openings (22) is arranged in the surface area (21) .

2. The gripping device (20) according to claim 1, **characterized in that** the openings (22) are arranged in one or more groups (40; 41).

3. The gripping device (20) according to claim 1 or 2, **characterized in that** the openings (22) are arranged in a regular pattern.

4. The gripping device (20) according to claim 2 or 3, **characterized in that** the openings (22) merge into a common vacuum chamber.

5. The gripping device (20) according to claim 2 or 3, **characterized in that** the openings (22) of each group (40; 41) merge into a respective common duct.

6. The gripping device (20) according to claim 4 or 5, **characterized in that** a drain valve (23) is connected to the common vacuum chamber or to each duct, respectively.

7. The gripping device (20) according to one of claims 1 to 6, **characterized in that** the openings (22) are connected to a vacuum unit such that a vacuum can be applied to each opening (22) .

8. The gripping device (20) according to one of claims 1 to 7, **characterized in that** the surface area (21) is designed to cover at least 10%, in particular 15%, of the respective surface area of the fibre-based product (30).

9. The gripping device (20) according to one of claims 1 to 8, **characterized in that** the surface area (21) is designed to cover at most 50% of the respective surface area of the fibre-based product (30).

10. The gripping device (20) according to one of claims 1 to 9, **characterized in that** the surface area (21) is bordered by a first cell foam.

11. The gripping device (20) according to claim 2 and one of claims 1 to 10, **characterized in that** each group (40; 41) of openings (22) is bordered by a second cell foam.

12. The gripping device (20) according to one of claims 1 to 11, **characterized in that** the openings (22) have a diameter between 0.1 mm and 5 mm, in particular, between 1 mm and 3 mm.

13. The gripping device (20) according to one of claims 1 to 12, **characterized in that** the openings (22) together have an area which covers at least 5% of the surface area (21).

14. The gripping device (20) according to one of claims 1 to 13, **characterized in that** the openings (22) together have an area which does not cover more than 60% of the surface area (21).
